# EUROPEAN PATENT APPLICATION

(11) **EP 4 836 078 A1**
(43) Date of publication of application: **04.11.2026**
(21) Application number: 24910200.5
(22) Date of filing: 22.10.2024
(51) Int. Cl.: H01M 10/613, H01M 10/659

(54) **BATTERY ASSEMBLY AND DEVICE**

(30) Priority: 29.12.2023 CN 202311872174
(71) Applicant: BYD Company Limited, Shenzhen, Guangdong 518118 (CN)
(72) Inventor: SU, Bizhe, Shenzhen, Guangdong 518118 (CN); CAI, Yaomin, Shenzhen, Guangdong 518118 (CN); PENG, Qingbo, Shenzhen, Guangdong 518118 (CN); LU, Zhipei, Shenzhen, Guangdong 518118 (CN); SUN, Huajun, Shenzhen, Guangdong 518118 (CN)
(74) Representative: Mathys & Squire
(86) International application number: PCT/CN2024/126266
(87) International publication number: WO 2025/139258

(57) **Abstract**

A battery assembly and a device. The battery assembly comprises a plurality of single-cell batteries, and heat-absorbing members are provided between oppositely arranged first surfaces of at least some adjacent single-cell batteries. Each heat-absorbing member comprises a main heat-absorbing material, the main heat-absorbing material comprises a heat-absorbing material, and the latent heat of phase change Hₚ of the heat-absorbing material is greater than or equal to 500 kJ/kg. The mass m of the main heat-absorbing material in kg satisfies the following relational expression: $0.5 Q / \left(α\times {H}_{p}\right) \leq m \leq 1.5 Q / \left(α\times {H}_{p}\right) .$

## Description

This application claims priority to Chinese Patent Application No. 202311872174.2, filed with the China National Intellectual Property Administration on December 29, 2023 and entitled "BATTERY ASSEMBLY AND DEVICE", which is incorporated herein by reference in its entirety.

### TECHNICAL FIELD

The present disclosure relates to the field of battery technologies, and specifically, to a battery assembly and a device.

### BACKGROUND

A single-cell battery is prone to internal short circuits and thermal runaway under conditions such as continuous overcharging, or collision/puncturing, and the thermal runaway may affect an adjacent battery. To suppress thermal propagation during thermal runaway of the single-cell battery, it is common practice in the industry to provide a flame-retardant medium (for example, aerogel) on a surface of a housing of the single-cell battery. However, aerogel can only delay heat transfer and cannot effectively absorb a large amount of heat released from an interior of the battery, which makes it difficult to effectively block thermal diffusion of the battery during thermal runaway. Therefore, it is necessary to develop a technical solution that can effectively block thermal diffusion of a single-cell battery in thermal runaway.

### SUMMARY

In view of this, the present disclosure provides a battery assembly and a device, to resolve the problem in an existing battery assembly that abnormal heat generation of a single-cell battery cannot be effectively suppressed from diffusion.

Specifically, a first aspect of the present disclosure provides a battery assembly, including a plurality of single-cell batteries. A heat-absorbing member is provided between first surfaces of at least some adjacent single-cell batteries that are disposed opposite to each other. The heat-absorbing member includes a main heat-absorbing material, and the main heat-absorbing material includes a heat-absorbing material. A latent heat of phase change Hₚ of the heat-absorbing material is greater than or equal to 500 kJ/kg, and a mass m of the main heat-absorbing material, which is measured in kg, satisfies the following relational expression: $0.5 Q / \left(α\times {H}_{p}\right) \leq m \leq 1.5 Q / \left(α\times {H}_{p}\right) ,$ where Q represents heat transferred outward through the first surface of one of the single-cell batteries adjacent to the heat-absorbing member in a thermal runaway process, and a unit of the heat is kJ; and α represents a correction factor, where when Hₚ is in a range from 500 kJ/kg to 1000 kJ/kg, α is 1.3; when Hₚ is in a range of greater than 1000 kJ/kg to less than or equal to 1600 kJ/kg, α is 1.2; when Hₚ is in a range of greater than 1600 kJ/kg to less than or equal to 2400 kJ/kg, α is 1.15; and when Hₚ is greater than 2400 kJ/kg, α is 1.1.

In the battery assembly, the mass of the main heat-absorbing material in the heat-absorbing member provided between at least some adjacent single-cell batteries is selected with respect to heat-absorbing characteristics of the heat-absorbing member and an amount of heat dissipated from a battery in thermal runaway through an adjacent surface to an adjacent battery. At least some heat-absorbing members are controlled to satisfy the foregoing relational expression, so that it can be effectively ensured that heat generated by abnormal heat generation of one or some single-cell batteries is sufficiently absorbed by the heat-absorbing member, thereby effectively suppressing heat diffusion to an adjacent battery, and ensuring safety of the overall battery assembly. In addition, this also ensures a relatively high effective space utilization of the battery assembly and prevents a volume occupied by the heat-absorbing member from being excessively large.

According to a second aspect, the present disclosure provides a device including the battery assembly according to the first aspect of the present disclosure, wherein the device includes an electrical equipment or an energy storage system.

### BRIEF DESCRIPTION OF DRAWINGS

FIG. 1A is a schematic diagram of a structure of an example of a battery assembly according to an embodiment of the present disclosure;
FIG. 1B is a schematic diagram of a structure of another example of a battery assembly according to an embodiment of the present disclosure;
FIG. 2 is a schematic diagram of a structure of a single-cell battery with a heat-absorbing member provided on a surface thereof according to an embodiment of the present disclosure;
FIG. 3 is a schematic diagram of performing a calorimetric test on a single-cell battery by using a heat balance calorimetry method;
FIG. 4 is a schematic structural diagram of a heat-absorbing member according to an embodiment of the present disclosure;
FIG. 5 is a schematic diagram of a structure of a main heat-absorbing material in FIG. 4; and
FIG. 6 is a block diagram of a structure of a device according to an embodiment of the present disclosure.

### DESCRIPTION OF EMBODIMENTS

The following describes technical solutions of embodiments of the present disclosure in detail with reference to the accompanying drawings.

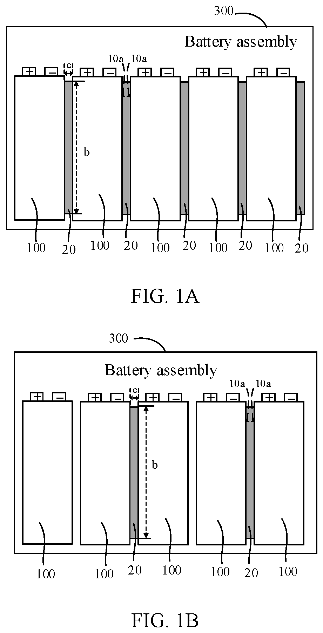

An embodiment of the present disclosure further provides a battery assembly. Reference is made to FIG. 1A and FIG. 1B. A battery assembly 300 provided in this embodiment of the present disclosure includes a plurality of single-cell batteries 100, and a heat-absorbing member 20 is provided between at least some adjacent single-cell batteries 100. The heat-absorbing member 20 is provided between first surfaces 10a of two adjacent single-cell batteries 100 that are disposed opposite to each other. The heat-absorbing member 20 includes a main heat-absorbing material (not shown in FIG. 1A or FIG. 1B). The main heat-absorbing material includes a heat-absorbing material having a latent heat of phase change Hₚ greater than or equal to 500 kJ/kg. A mass m of the main heat-absorbing material, which is measured in kg, satisfies the following relational expression: $0.5 Q / \left(α\times {H}_{p}\right) \leq m \leq 1.5 Q / \left(α\times {H}_{p}\right) ,$ where Q represents heat transferred outward through the first surface 10a of one single-cell battery 100 adjacent to the heat-absorbing member (20) in a thermal runaway process, and a unit of the heat is kJ; and α represents a correction factor, where when Hₚ is in a range of greater than 500 kJ/kg to less than or equal to 1000 kJ/kg, α is 1.3; when Hₚ is in a range of greater than 1000 kJ/kg to less than or equal to 1600 kJ/kg, α is 1.2; when Hₚ is in a range of greater than 1600 kJ/kg to less than or equal to 2400 kJ/kg, α is 1.15; and when Hₚ is greater than 2400 kJ/kg, α is 1.1.

The introduction of α into the foregoing relational expression can reflect a true heat absorbing capability of the main heat-absorbing material. Specifically, in the present disclosure, it is determined, based on a large quantity of experiments, that there is a difference between an amount of heat that can be absorbed by the heat-absorbing member and an amount of heat transferred outward through the first surface of a single-cell battery adjacent to the heat-absorbing member during a thermal runaway process. Therefore, to more accurately obtain a mass range of the main heat-absorbing material in the heat-absorbing member, a correction factor is determined in the present disclosure to determine the true heat absorption capability of the main heat-absorbing material. Further, in the present disclosure, it will be understood, based on a large quantity of experiments, that as the latent heat of phase change Hₚ of the heat-absorbing material in the main heat-absorbing material gradually increases, the heat absorption capability of the heat-absorbing material becomes stronger. Therefore, an amount of heat that can be absorbed per unit mass is relatively greater, but heat absorption efficiency of the heat-absorbing material decreases. Therefore, there is a need to adjust the mass of the heat-absorbing material to implement heat absorption, and consequently, the correction factor α gradually decreases as the latent heat of phase change Hₚ of the heat-absorbing material gradually increases, to ensure that the heat absorption capability of the main heat-absorbing material is closer to reality. Still further, in the present disclosure, it will be understood, based on a large quantity of experiments, that when Hₚ is in a range of greater than 500 kJ/kg to less than or equal to 1000 kJ/kg, α is 1.3; when Hₚ is in a range of greater than 1000 kJ/kg to less than or equal to 1600 kJ/kg, α is 1.2; when Hₚ is in a range of greater than 1600 kJ/kg to less than or equal to 2400 kJ/kg, α is 1.15; and when Hₚ is greater than 2400 kJ/kg, α is 1.1. In this way, the mass of the main heat-absorbing material can be estimated more accurately, so that the heat-absorbing member can achieve the heat absorption capability under an actual operating condition, and a single-cell battery in thermal runaway is prevented from affecting an adjacent single-cell battery.

The foregoing Q may also represent an amount of heat that needs to be absorbed by the heat-absorbing member 20, so that Q/(α×Hₚ) reflects a theoretical limit mass mₗᵢₘᵢₜ of the main heat-absorbing material. In the present disclosure, the latent heat of phase change Hₚ of the main heat-absorbing material is controlled to be greater than 500 kJ/kg, thereby ensuring that the main heat-absorbing material has a high capability to absorb heat generated by a battery in thermal runaway. The mass m of the main heat-absorbing material is controlled to be between 0.5 mₗᵢₘᵢₜ and 1.5 mₗᵢₘᵢₜ, so that an amount of the main heat-absorbing material can better meet an actual requirement. This effectively ensures that heat generated by abnormal heat generation of a specific single-cell battery 100 is effectively absorbed, suppressing a chain thermal runaway phenomenon caused by thermal diffusion. In addition, this also makes a volume ratio of the heat-absorbing member small, so that a relatively large quantity of single-cell batteries 100 can be accommodated in a given volume of the battery assembly 300, and consequently, the battery assembly 300 has high space utilization and large power output.

When m is less than 0.5 mₗᵢₘᵢₜ, the amount of the main heat-absorbing material is insufficient to absorb heat transferred outward through the first surface of the battery during thermal runaway. When m is greater than 1.5 mₗᵢₘᵢₜ, the amount of the main heat-absorbing material is excessive, and a thickness of the main heat-absorbing material is relatively large. Therefore, a thickness of the heat-absorbing member 20 is relatively large correspondingly, which reduces the space utilization of the single-cell battery in the battery assembly.

In the battery assembly 300, the main heat-absorbing material in the heat-absorbing member 20 provided between at least some adjacent single-cell batteries 100 satisfies the foregoing relational expression. In this way, when a specific single-cell battery 100/some single-cell batteries 100 undergoes/undergo thermal runaway, thermal diffusion/thermal propagation thereof is sufficiently suppressed by the heat-absorbing member 20, thereby preventing an adjacent battery from being affected. It is ensured that the battery assembly 300 has good safety and can still output energy to electrical equipment. In addition, the foregoing relational expression can ensure that a ratio of a total volume of the heat-absorbing members 20 in the battery assembly 300 is relatively small, so that the space utilization of the battery assembly 300 is high. Therefore, the battery assembly 300 can provide a relatively high amount of electricity to the electrical equipment, thereby having outstanding market competitiveness.

In addition, the relational expression satisfied by the heat-absorbing member 20 is universal and can be applied to manufacturing of heat-absorbing members for single-cell batteries of various systems, models, and shapes. For example, the single-cell battery may include, but is not limited to, a lithium battery, a sodium battery, a potassium battery, a zinc battery, and the like. The single-cell battery 100 may be a prismatic battery, or may be a blade-shaped battery, a hexagonal prism battery, a battery with an irregular shape, or the like. It will be understood that in the present disclosure, the mass m, which is measured in g, of the main heat-absorbing material satisfies: 500Q/(α×Hₚ)≤m≤1500Q/(α×Hₚ).

In the present disclosure, Q represents the heat transferred outward through the first surface 10a of one single-cell battery 100 adjacent to the heat-absorbing member 20 during a thermal runaway process. "Thermal runaway" of a single-cell battery will be understood as a state in which a voltage of the single-cell battery 100 drops to 0 and an explosion-proof valve of the single-cell battery 100 opens. Based on the embodiments of the present disclosure, a thermal runaway process is a process from before thermal runaway of the single-cell battery to an end of thermal runaway of the battery. Specifically, "before thermal runaway of the single-cell battery" means that temperatures collected by any two thermocouples on the surface of the single-cell battery are consistent before thermal runaway occurs. Generally, a state before thermal runaway of the single-cell battery is a normal temperature state, for example, the temperatures collected by the thermocouples on the surface of the single-cell battery are 25°C ± 5°C. "End of thermal runaway" means a moment at which, after thermal runaway of the single-cell battery occurs, the temperatures collected by any two thermocouples on the surface of the single-cell battery become consistent again after a period of time. In some embodiments, the thermal runaway process is a process in which, when a single-cell battery adjacent to the heat-absorbing member experiences thermal runaway, a temperature of the single-cell battery rises from room temperature and then decreases back to room temperature. In addition, in some embodiments, the surface of the single-cell battery is the first surface of the single-cell battery adjacent to the heat-absorbing member.

In some implementations of the present disclosure, in the plurality of single-cell batteries in the battery assembly 300, any two adjacent single-cell batteries 100 may be separated by the heat-absorbing member 20 (as shown in FIG. 1A). The heat-absorbing member 20 is provided between the first surfaces 10a of any two adjacent single-cell batteries 100. To be specific, the single-cell batteries 100 and the heat-absorbing members 20 are alternately arranged in a first direction, and the first direction is parallel to a thickness direction of the heat-absorbing member 20. The heat-absorbing member is provided between any two adjacent single-cell batteries, which can ensure good safety performance of any battery assembly formed. This is particularly suitable for a battery assembly including single-cell batteries having relatively poor intrinsic safety performance, such as a battery system in which a positive electrode uses a ternary cathode material. If the single-cell battery 100 is denoted as A and the heat-absorbing member 20 is denoted as B, an arrangement form of the single-cell battery 100 and the heat-absorbing member 20 may be as follows: A-B-A-B...A-B (as shown in FIG. 1A), A-B-A-B...A, or the like.

In some other implementations of the present disclosure, in the plurality of single-cell batteries in the battery assembly 300, the heat-absorbing member 20 may be provided between some adjacent single-cell batteries 100, while no heat-absorbing member is provided between some other adjacent single-cell batteries 100 (as shown in FIG. 1B). This case is particularly suitable for a battery assembly including single-cell batteries having high intrinsic safety performance, such as a battery in which a positive electrode material is a phosphate material. If the single-cell battery 100 is denoted as A and the heat-absorbing member 20 is denoted as B, the arrangement form of the single-cell battery 100 and the heat-absorbing member 20 in a direction parallel to a thickness direction of the heat-absorbing member may be as follows: AAB-AAB...AAB (as shown in FIG. 1B), or AAAB-AAAB...AAAB, or AB-AAB-AAB..., but is not limited thereto.

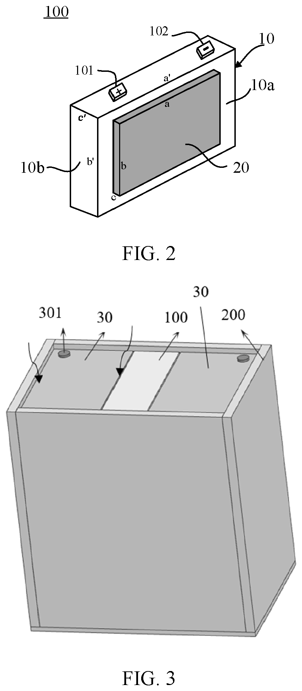

The first surfaces 10a are surfaces, which are adjacent and opposite to each other, of two adjacent single-cell batteries. In some implementations of the present disclosure, the single-cell battery 100 is a prismatic battery having a prismatic housing, and the first surface 10a may specifically be a large surface 10a of the prismatic housing, that is, a side surface, which has the largest area, of the prismatic housing of the single-cell battery 100. FIG. 2 is a schematic diagram of a structure of a single-cell battery with a heat-absorbing member provided on a surface thereof according to an embodiment of the present disclosure. The single-cell battery 100 in FIG. 2 is a prismatic battery, and the single-cell battery 100 includes a prismatic housing 10. The heat-absorbing member 20 is provided on the large surface 10a of the housing 10. It will be understood that the housing 10 includes two large surfaces 10a disposed opposite to each other and two small surfaces 10b disposed opposite to each other. The two large surfaces 10a are connected to each other through the small surfaces 10b, and the two large surfaces 10a and the two small surfaces 10b enclose the prismatic housing 10. In FIG. 2, a' > b' > c'. A plane defined by the length a' and the height b' of the housing 10 is the large surface 10a of the housing, and a plane defined by the height b' and the width c' of the housing 10 is the small surface 10b of the housing.

The housing 10 may be a housing known to a person skilled in the art. For example, the housing 10 is an aluminum-plastic housing. A battery cell assembly (not shown in FIG. 2) may be accommodated in the housing 10. In addition, the single-cell battery 100 further has a positive electrode terminal 101 and a negative electrode terminal 102 exposed at a top of the housing 10. The battery cell assembly usually includes a plurality of positive electrode plates and a plurality of negative electrode plates, and adjacent positive electrode plates and negative electrode plates may be separated by a separator or a semi-solid/all-solid electrolyte material. Accordingly, the single-cell battery 100 may be a liquid battery, or an all-solid-state battery or a semi-solid-state battery. The positive electrode terminal 101 of the single-cell battery 100 may be electrically connected to the positive electrode plates, and the negative electrode terminal 102 may be electrically connected to the negative electrode plates. The two terminals serve as electrical contact points for charging and discharging of the single-cell battery 100.

In the present disclosure, the heat-absorbing member 20 may be sheet-like, and a thickness of the heat-absorbing member 20 is less than a lateral dimension of the heat-absorbing member 20. In this case, the heat-absorbing member may also be referred to as a "heat-absorbing sheet". A thickness direction of the heat-absorbing member 20 is perpendicular to the first surface 10a of the single-cell battery 100. A sheet-like heat-absorbing member has a relatively small thickness, so that a battery assembly including a plurality of single-cell batteries 100 has high space utilization. A cross-sectional shape of the heat-absorbing member 20 may be a regular rectangle, pentagon, hexagon, or another irregular shape. In some embodiments, the cross-sectional shape of the heat-absorbing member 20 is a rectangle (as shown in FIG. 2), which is consistent with a shape of the housing 10. In FIG. 2, a thickness c of the heat-absorbing member 20 is much less than a length a thereof and is less than a width b thereof. The thickness c of the heat-absorbing member 20 is also much less than the width c' of the housing 10. In addition, the length a of the heat-absorbing member 20 may be less than, equal to, or greater than the length a' of the housing 10, and the width b of the heat-absorbing member 20 may be less than, equal to, or greater than the height b' of the housing 10. FIG. 2 shows an example of the "less than" case.

In the present disclosure, the parameter Hₚ described above may be obtained by performing differential scanning calorimetry (DSC for short) testing on the heat-absorbing member 20. Specifically, a preset mass m₁ may be taken from the heat-absorbing material of the heat-absorbing member 20 to test a total heat amount H released by the preset mass of the heat-absorbing material undergoing a phase change during a temperature rise process. According to H/m₁ (where m1 is the preset mass of the heat-absorbing material in the heat-absorbing member 20, for example, 50 g, 100 g, or 150 g), an amount of heat released per unit mass of the heat-absorbing material during the phase change can be obtained, that is, the latent heat of phase change Hₚ of the heat-absorbing material can be obtained. In addition, the DSC testing scheme has dedicated testing equipment, such as a differential scanning calorimeter DSC.

In the present disclosure, Q described above is measured based on a heat balance calorimetry method. FIG. 3 is a schematic diagram of performing a calorimetric test on a single-cell battery by using a heat balance calorimetry method. In the heat balance calorimetry method, the single-cell battery 100 and two thermally conductive containers 30 filled with high heat capacity materials (the high heat capacity material is not shown in FIG. 3) are placed in a heat insulating container 200, and two first surfaces 10a of the single-cell battery 100 are respectively attached to side walls of the two thermally conductive containers 30. The single-cell battery 100 is triggered to undergo thermal runaway, and Q is tested, where Q=M×c₂×ΔT. M represents an initial total mass of the high heat capacity material in one thermally conductive container 30, with a unit of kg. c₂ represents a specific heat capacity of the high heat capacity material, with a unit of kJ/(kg·K). ΔT represents a temperature rise of the high heat capacity material during the thermal runaway process of the single-cell battery 100, with a unit of °C. It will be understood that the heat amount Q measured by using the foregoing testing method is heat transferred outward through one first surface 10a of a single-cell battery.

Because Q is measured based on the heat balance calorimetry method, the mass of the main heat-absorbing material in the heat-absorbing member 20 is indirectly calculated based on the heat balance calorimetry method. Specifically, the heat generated by the single-cell battery 100 during thermal runaway may be conducted to the thermally conductive container 30 through the first surface of the single-cell battery 100, and then conducted by the thermally conductive container 30 to the built-in high heat capacity material. The foregoing formula Q=M×c₂×ΔT can also intuitively reflect an amount of heat absorbed by the high heat capacity material, which is conducted from the first surface of the battery in thermal runaway on a side adjacent to a neighboring battery. Based on the measured precise heat absorption amount Q of the high heat capacity material, a usage range of the main heat-absorbing material in the heat-absorbing member that can absorb the heat is calculated. In this way, it can be ensured that the heat-absorbing member 20 can effectively absorb heat generated by abnormal heat generation of the single-cell battery 100 and suppress thermal diffusion/propagation, thereby ensuring safety of a battery assembly made of a plurality of single-cell batteries without affecting assembly efficiency of the battery assembly.

In the heat balance calorimetry test, first, the single-cell battery 100 and two thermally conductive containers 30 filled with high heat capacity materials are placed in the heat insulating container 200 in the arrangement described above in the present disclosure. Then, the single-cell battery 100 is triggered to undergo thermal runaway through, for example, puncturing. Before thermal runaway is triggered, two thermocouples disposed opposite to each other are arranged in one of the thermally conductive containers 30. One of the two thermocouples is adjacent to a side wall in contact with the first surface 10a of the single-cell battery 100, and the other is away from the first surface 10a of the single-cell battery 100 (arrangement positions of the two thermocouples are shown in FIG. 3 by curved arrows), to perform temperature collection. ΔT=T₂-T₁, where T₁ is a temperature of the high heat capacity material before the single-cell battery undergoes thermal runaway (in this case, temperatures collected by the two thermocouples are also consistent). Generally, a state of a single-cell battery before thermal runaway is a normal temperature state, for example, the temperatures collected by the thermocouples on the surface of the single-cell battery are 25°C ± 5°C. T₂ is a highest temperature obtained when the temperatures collected by the two thermocouples become consistent after the single-cell battery undergoes thermal runaway.

M may be obtained through direct weighing/indirect weighing of the high heat capacity material filled in each thermally conductive container 30, specifically, by performing measurement before triggering thermal runaway of the single-cell battery in the heat balance calorimetry test. c₂ is an inherent parameter of a selected high heat capacity material.

In the embodiments of the present disclosure, the specific heat capacity c₂ of the high heat capacity material is greater than or equal to 2 kJ/(kg·K). The high heat capacity material may be a substance that is liquid at room temperature or a substance that can become liquid after a specific heat treatment, to ensure accuracy of measurement results of T₁ and T₂ described above. Specifically, the high heat capacity material may be selected from one or more of water, glycerol, ethylene glycol, paraffin wax, or hydrogel, but is not limited thereto. These materials have high specific heat capacities and strong heat absorption capabilities, and can absorb heat generated by a battery in thermal runaway, thereby facilitating indirect measurement of heat transferred outward through a surface of a battery during thermal runaway opposite to an adjacent battery. Water, glycerol, ethylene glycol, and the like are liquid-gas phase change materials, and paraffin wax and the like are solid-liquid phase change materials. In addition, to facilitate filling of the high heat capacity material, a filling port 301 is usually further provided at a top of each thermally conductive container 30.

In the embodiments of the present disclosure, in each thermally conductive container 30, a total volume occupied by the high heat capacity material accounts for 50% to 99% of a volume of the thermally conductive container 30. In this way, each thermally conductive container 30 has a suitable volume of the high heat capacity material, which ensures that the heat generated by the battery in thermal runaway can be effectively absorbed. In addition, this avoids a case in which an excessive volume ratio causes an insignificant temperature rise ΔT, which prevents precise temperature measurement and affects accuracy of the Q test result described above. Specifically, the volume ratio may be 55%, 60%, 70%, 75%, 80%, 85%, 90%, 95%, or the like.

In an implementation of the present disclosure, the high heat capacity material satisfies: 0.02×U×C≤M×c₂≤0.1×U×C, where C and U respectively represent a full charge capacity (also referred to as "nominal capacity") and an average discharge voltage (also referred to as a "nominal voltage") of the single-cell battery 100, with units of Ah and V, respectively. The product of a total mass M of the high heat capacity material and the specific heat capacity is controlled to satisfy the foregoing relationship, which can ensure that the high heat capacity material has a suitable temperature rise ΔT before and after thermal runaway of the single-cell battery 100. A suitable temperature rise not only ensures accuracy of the temperature rise test result, but also ensures low probability of heat exchange with an external environment and ensures that the high heat capacity material is not completely vaporized, thereby ensuring accuracy of the Q measurement result. In addition, the presence of the heat insulating container 200 also helps suppress heat exchange between the high heat capacity material, the thermally conductive container 30, and the outside. Both C and U can be determined by reading a specification sheet of the single-cell battery.

In an implementation of the present disclosure, the temperature rise ΔT of the high heat capacity material during the thermal runaway process of the single-cell battery is less than or equal to 100°C. ΔT is not excessively high, so that the test result of Q is more accurate. Specifically, Δ T may be ≤95°C, ≤90°C, ≤80°C, ≤70°C, ≤60°C, ≤50°C, ≤40°C, ≤30°C, or the like. In some implementations, ΔT may be in a range of 20°C to 30°C.

In an implementation of the present disclosure, a wall thickness of the thermally conductive container 30 is between 0.05 mm and 5 mm. In this way, the thermally conductive container 30 has a suitable mechanical property, and does not have an excessively large thickness that hinders rapid transfer of heat originating from the battery in thermal runaway to the high heat capacity material placed therein, so that the foregoing Q can be quickly measured.

In the present disclosure, the thermally conductive container 30 is made of a material having high thermal conductivity. A side wall of the thermally conductive container 30 in contact with the single-cell battery 100 can withstand a temperature above 500°C. For example, the side wall of the thermally conductive container 30 or the entire thermally conductive container 30 may be made of a metal material with good thermal conductivity (for example, a steel plate or an aluminum plate), or may be made of a high-temperature-resistant inorganic non-metallic material, or an inorganic-organic composite material, or the like.

In the present disclosure, the heat insulating container 200 may be made of a material having low thermal conductivity, and specifically may be formed by enclosing plates made of a material having low thermal conductivity. The thermal conductivity of the material having low thermal conductivity is less than 0.2 W/(m·K). In some implementations of the present disclosure, the heat insulating container 200 is formed by enclosing aluminum silicate plates.

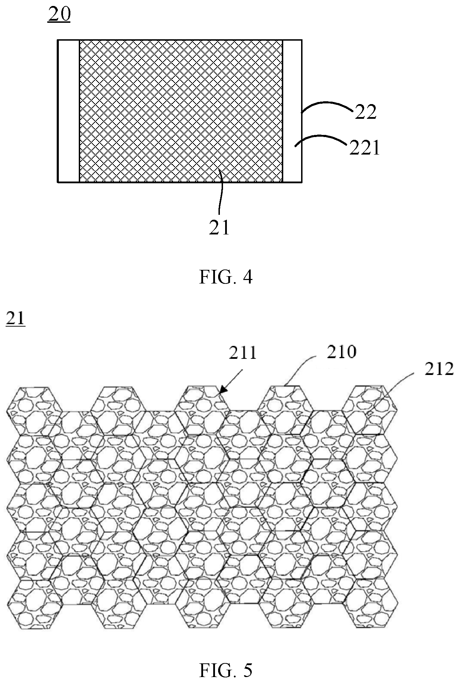

In an implementation of the present disclosure, referring to FIG. 4, the heat-absorbing member 20 may include the main heat-absorbing material 21 and a packaging film 22. An accommodating cavity 221 is formed inside the packaging film 22, and the main heat-absorbing material 21 is provided in the accommodating cavity 221. The presence of the packaging film 22 can improve wrapping and protection of the main heat-absorbing material 21, and can prevent leakage, shedding, and the like of effective components in the main heat-absorbing material 21. The packaging film 22 may be selected from one or more of PP (polypropylene), PET (polyethylene terephthalate), PI (polyimide), TPU (thermoplastic polyurethane elastomer), aluminum-plastic film, and the like. These materials have specific flexibility, so that the packaging film 22 can closely adhere to a surface of the main heat-absorbing material 21, thereby providing good protection. In some embodiments, the packaging film 22 may be rectangular, and two sides or four sides of the packaging film 22 may be sealed by heat sealing. In addition, a thickness of the packaging film 22 may be selected based on an actual requirement. In an embodiment, a mass of the packaging film 22 may be excessively small, and a mass of the main heat-absorbing material 21 may be not much different from a mass of the heat-absorbing member 20. The mass of the main heat-absorbing material 21 may be considered as the mass of the heat-absorbing member 20. In another embodiment, the mass of the packaging film 22 may approach or exceed the mass of the main heat-absorbing material. In this case, only the mass of the main heat-absorbing material is calculated. Further, when the mass of the packaging film 22 is less than 10% of the mass of the main heat-absorbing material, for ease of measurement, the mass of the heat-absorbing member may be considered as the mass of the main heat-absorbing material.

In some implementations of the present disclosure, referring to FIG. 5, the main heat-absorbing material 21 includes a skeleton 210 and a heat-absorbing material 212. The skeleton 210 has a plurality of holes 211 extending through the skeleton 210 in a thickness direction of the skeleton 210, and the heat-absorbing material 212 fills the holes 211. In this case, the heat-absorbing material 212 is an active ingredient of the main heat-absorbing material 21 that performs a heat absorption function. Hₚ of the main heat-absorbing material 21 described above is specifically Hₚ of the heat-absorbing material 212. The skeleton 210 serves to support and shape the heat-absorbing material 212, and the skeleton 210 may be made of a mesh polymer material.

In the present disclosure, the heat-absorbing material 212 is a composite material retaining a liquid phase change medium. The heat absorption function is achieved by means of a phase change of the liquid phase change medium. The liquid phase change medium includes at least one of liquids such as water, ethanol, and ethylene glycol. In some implementations of the present disclosure, the heat-absorbing material 212 may be a hydrogel retaining water, a hydrated salt, a composite thereof, or the like. A phase change temperature of the heat-absorbing material 212 may be adjusted by regulating water content therein. The composite may be a composite of a hydrogel or a hydrated salt with another material (for example, a flame retardant). The hydrogel is used as an example. A polymer material having a network structure may be used as a matrix of the hydrogel, with water serving as the liquid phase change medium. In some other implementations of the present disclosure, the heat-absorbing material 212 may be a material retaining a liquid such as ethanol or ethylene glycol.

In some other implementations of the present disclosure, the main heat-absorbing material 21 does not include a skeleton, and the main heat-absorbing material 21 may be only the foregoing heat-absorbing material. The heat-absorbing material may be directly encapsulated in the packaging film 22. For example, the main heat-absorbing material may be the hydrogel, the hydrated salt, or the composite thereof described above.

In an embodiment of the present disclosure, regardless of whether the main heat-absorbing material includes the skeleton 210 and the heat-absorbing material 212 or the main heat-absorbing material 21 includes only the heat-absorbing material 212, the main heat-absorbing material is located in the packaging film 22, to implement sealing and prevent the heat-absorbing material from undergoing a phase change that reduces the mass of the heat-absorbing material, thereby ensuring heat absorption effect of the heat-absorbing material.

In an implementation of the present disclosure, the phase change temperature of the foregoing main heat-absorbing material 21 may be in a range of 85°C to 180°C. To be precise, the phase change temperature of the heat-absorbing material is in the range of 85°C to 180°C. An initial temperature of the single-cell battery 100 in thermal runaway is usually in this temperature range. The phase change temperature of the main heat-absorbing material is also controlled to be in this range, so that the main heat-absorbing material can quickly absorb heat to take away heat at an initial stage of thermal runaway of the single-cell battery 100, thereby suppressing thermal diffusion. Specifically, the phase change temperature may be 90°C, 100°C, 110°C, 120°C, 130°C, 140°C, 150°C, 160°C, 170°C, or the like.

In an embodiment of the present disclosure, a ratio of an area of a surface of the heat-absorbing member 20 in contact with the first surface 10a to an area of the first surface 10a is greater than or equal to 0.8 and less than or equal to 1. The ratio of the contact area between the heat-absorbing member and the first surface is set to be within this range, so that the heat-absorbing member 20 can be in full contact with the first surface 10a, thereby ensuring good heat absorption effect of the heat-absorbing member 20. Preferably, the area of the surface of the heat-absorbing member in contact with the first surface is equal to the area of the first surface, so that the heat-absorbing member completely absorbs heat transferred from the first surface of a single-cell battery adjacent to the heat-absorbing member.

In an embodiment of the present disclosure, a distance between a geometric center of the surface of the heat-absorbing member 20 in contact with the first surface 10a and a geometric center of the first surface 10a is less than or equal to 1 mm and greater than or equal to 0. Through the foregoing arrangement, it can be ensured that the heat-absorbing member 20 does not deviate too much from the first surface 10a, thereby improving the heat absorption effect of the heat-absorbing member.

In an implementation of the present disclosure, the battery assembly 300 may be a battery module or a battery pack. In the battery assembly 300, a plurality of single-cell batteries 100 may be connected in series, in parallel, or in a combination thereof to form a battery group. The plurality of single-cell batteries 100 may alternatively be encapsulated together by the same outer housing frame, and communicate with the outside through a unified boundary.

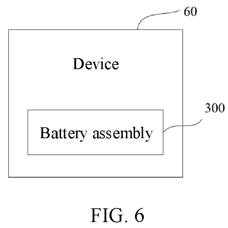

FIG. 6 is a block diagram of a structure of a device according to an embodiment of the present disclosure. An embodiment of the present disclosure further provides a device 60, which includes the battery assembly 300 in the embodiments of the present disclosure. The device 60 may include an electrical equipment, an energy storage system, or the like.

The electrical equipment includes, but is not limited to, a means of transportation (for example, a ship or a vehicle (for example, a new energy vehicle or a bus)) or a 3C product (for example, a mobile phone or a tablet computer), and the like. The new energy vehicle may be a battery electric vehicle, a hybrid electric vehicle, an extended-range vehicle, or the like.

The energy storage system may be a site energy backup power system, an intelligent photovoltaic energy storage power station, or the like.

The following further describes the technical solutions of the present disclosure in detail by using a plurality of specific embodiments.

### Example 1

A prismatic single-cell battery is provided, which has a housing with the following dimensions: length a' of 475 mm, height b' of 83.8 mm, and width c' of 14.5 mm. A battery cell type is ternary NCM811, and a battery mass is 1.3 kg. A full charge capacity I and an average discharge voltage U of the single-cell battery are shown in Table 1.

A hydrogel having a latent heat of phase change Hₚ of 1600 kJ/kg and a phase change temperature of 118°C is selected as the heat-absorbing material. The hydrogel is coated onto a PET substrate, cured to form a film having a specific thickness, and then the film is peeled off from the PET substrate and cut to obtain a main heat-absorbing material having a mass m of 0.12392 kg (that is, 123.93 g). An aluminum-plastic film (with a thickness of 0.085 mm) is used to heat-seal the main heat-absorbing material, thereby obtaining a sheet-like heat-absorbing member (which may be referred to as a "heat-absorbing sheet").

A plurality of single-cell batteries are assembled into a battery assembly, and the heat-absorbing sheet is placed between large surfaces of any two adjacent single-cell batteries that are disposed opposite to each other. In other words, in the battery assembly, an arrangement mode of the single-cell batteries and the heat-absorbing sheets is ABAB..., where A represents the single-cell battery and B represents the heat-absorbing sheet.

A thermal runaway heat test is performed on the single-cell battery by using a heat balance calorimetry method to obtain the Q value in the foregoing relational expression. Specifically, the following steps are included:
1) two thermally conductive containers 30 filled with high heat capacity materials (specifically water, having a specific heat capacity c₂ of 4.2 kJ/(kg·K)) are provided. The thermally conductive container is made of an aluminum plate with a wall thickness of approximately 2 to 3 mm. In each thermally conductive container, a volume occupied by the high heat capacity material is approximately 80% of an available volume of the thermally conductive container. The total mass M of the high heat capacity material contained in one thermally conductive container is obtained through weighing, and a unit of the total mass M is kg;
2) as shown in FIG. 3, one of the single-cell batteries at 100% SOC at room temperature (which may be separated from the battery assembly) together with the two thermally conductive containers 30 filled with the high heat capacity materials are placed in the heat insulating container 200, and two large surfaces of the single-cell battery are enabled to be in contact with side walls of the two thermally conductive containers. Two thermocouples disposed opposite to each other are arranged in one of the thermally conductive containers for temperature collection. One of the thermocouples is adjacent to a side wall in contact with the large surface of the single-cell battery, and the other is away from the large surface of the single-cell battery. A temperature T₁ of the two thermocouples is collected before thermal runaway of the single-cell battery, and the temperature is also an initial temperature of the high heat capacity material; and
3) then, the single-cell battery is triggered to undergo thermal runaway through puncturing, and a temperature T2 obtained when the temperatures collected by the two thermocouples became consistent is collected, thereby obtaining the temperature rise ΔT of the high heat capacity material during the thermal runaway process of the single-cell battery, where ΔT=T₂-T₁. Then, an amount of heat Q transferred outward through one large surface of the single-cell battery during the thermal runaway process is calculated as Q=M×c₂×ΔT.

According to the foregoing description of the present disclosure, an upper limit value and a lower limit value of the mass of the main heat-absorbing material may be calculated (where α is taken as 1.2 when substituted into the foregoing relational expression). The results are shown in Table 1. It is found through comparison that an actual mass m of the main heat-absorbing material is between the upper limit value and the lower limit value.

In addition, a ratio of a sum of thicknesses c of all heat-absorbing sheets to a sum of widths c' (that is, the thicknesses) of the single-cell batteries in the battery assembly is measured, and the results are shown in Table 1. A nail penetration test is also performed on the battery assembly, which specifically includes the following steps: after each single-cell battery is fully charged, a steel needle with a diameter of 3 mm is inserted at a speed of 0.5 mm/s into a middle of a central single-cell battery until the battery undergoes thermal runaway, and afterwards, the insertion is stopped. Continuous observation is performed until the collected temperature falls below 100°C, at which point the test ends. After the test, it is recorded whether an adjacent battery undergoes thermal runaway (a criterion for thermal runaway is a voltage drop or opening of the explosion-proof valve), that is, whether thermal diffusion occurs.

According to Example 1, battery assemblies of other examples and comparative examples are prepared, with main differences listed in the tables below.

Hₚ of a heat-absorbing material used in Example 7 is 1756.5 kJ/kg, and water content of the heat-absorbing material is different from that in Example 1. When substituted into the foregoing relational expression, α is taken as 1.15. Hₚ of a heat-absorbing material in Example 8 is 846.15 kJ/kg, and water content of the heat-absorbing material is different from that in Example 1. When substituted into the foregoing relational expression, α is taken as 1.1.

**Table 1**

| | Example 1 | Example 2 | Example 3 | Example 4 |
|---|---|---|---|---|
| Battery type | Ternary 811 | Ternary 532 | Lithium iron phosphate | Lithium iron phosphate |
| Battery length a'×height b'×width c' (mm) | 475×83.8×14.5 | 475×83.8×14.5 | 475×83.8×14.5 | 475×83.8×14.5 |
| Battery mass (kg) | 1.3 | 1.32 | 1.23 | 1.22 |
| Full charge capacity I | 84.3 | 74.9 | 67.7 | 66.7 |

| (Ah) | | | | |
|---|---|---|---|---|
| Average discharge voltage (V) | 3.7 | 3.7 | 3.2 | 3.2 |
| Arrangement mode | ABAB | ABAB | ABAB | AABAAB |
| Mass M of a high heat capacity material (kg) | 2.97 | 2.64 | 2.2 | 2.29 |
| Temperature rise ΔT (°C) | 30 | 27 | 21 | 29 |
| Hₚ (kJ/kg) | 1600 | 1600 | 1600 | 1600 |
| α | 1.2 | 1.2 | 1.2 | 1.2 |
| Heat transfer Q through a large surface (kJ) | 374 | 299 | 194.04 | 194.04 |
| Lower limit of a mass of a main heat-absorbing material (g) | 97.45 | 77.96 | 50.53 | 50.53 |
| Upper limit of a mass of a main heat-absorbing material (g) | 292.36 | 233.89 | 151.59 | 151.59 |
| Dimension of a heat-absorbing sheet a×b×c (mm×mm×mm) | 470×80×3.2 | 470×80×2.8 | 470×80×1.9 | 470×80×3 |
| Actual mass m of a main heat-absorbing material (g) | 123.93 | 108.44 | 73.58 | 116.18 |
| Total thickness ratio of all heat-absorbing sheets (%) | 22 | 19 | 13 | 10 |
| Nail penetration result | No diffusion | No diffusion | No diffusion | No diffusion |

**Table 2**

| | Example 5 | Example 6 | Example 7 | Example 8 |
|---|---|---|---|---|
| Battery type | Lithium iron phosphate | Lithium iron phosphate | Lithium iron phosphate | Lithium iron phosphate |
| Battery: length a'×height b'×width c' (mm) | 475×83.8×14.5 | 250×113×67 | 475×83.8×14.5 | 475×83.8×14.5 |
| Battery mass (kg) | 1.26 | 3.7 | 1.22 | 67.5 |
| Full charge capacity I (Ah) | 70.9 | 202.3 | 1.20 | 67.6 |
| Average discharge voltage (V) | 3.2 | 3.2 | 3.2 | 3.2 |
| Arrangement mode | AAABAAAB | ABAB | ABAB | ABAB |
| Mass M of a high heat capacity material (kg) | 2.70 | 6.17 | 2.1 | 2.2 |
| Temperature rise ΔT (°C) | 35 | 21 | 22 | 20 |
| Heat Q transferred through a large surface (kJ) | 397 | 544.19 | 194.04 | 184.8 |
| Hp (kJ/kg) | 1600 | 1600 | 1756 | 846 |
| α | 1.2 | 1.2 | 1.15 | 1.3 |
| Lower limit of a mass of a main heat-absorbing material (g) | 103.36 | 141.72 | 48.03 | 84.0 |
| Upper limit of a mass of a main heat-absorbing material (g) | 310.08 | 425.15 | 144.09 | 252.0 |
| Dimension of a heat-absorbing sheet a×b×c (mm×mm×mm) | 470×80×4.1 | 246×110×6 | 470×80×1.5 | 470×80×2.4 |
| Actual mass m of a main heat-absorbing material (g) | 158.78 | 167.23 | 58.09 | 92.95 |
| Total thickness ratio of all heat-absorbing sheets (%) | 6 | 9 | 10 | 17 |
| Nail penetration result | No diffusion | No diffusion | No diffusion | No diffusion |

**Table 3**

| | Comparative example 1 | Comparative Example 2 | Comparative Example 3 | Comparative Example 4 | Comparative Example 5 |
|---|---|---|---|---|---|
| Battery type | Ternary 811 | Ternary 811 | Lithium iron phosphate | Lithium iron phosphate | Lithium iron phosphate |
| Battery: length a'×height b'×width c' (mm) | 475×83.8×14. 5 | 475×83.8×14.5 | 475×83.8×14.5 | 475×83.8×14.5 | 475×83.8×14.5 |
| Battery mass (kg) | 1.33 | 1.3 | 1.24 | 1.21 | 1.21 |
| Full charge capacity I (Ah) | 86.3 | 84.3 | 69.0 | 67.5 | 67.5 |
| Average discharge voltage (V) | 3.7 | 3.7 | 3.2 | 3.2 | 3.2 |
| Arrangement mode | ABAB | ABAB | AABAAB | ABAB | ABAB |
| Mass M of a high heat capacity material (kg) | 3.04 | 2.97 | 2.36 | 2.2 | 1.9 |
| Temperature rise ΔT (°C) | 31 | 30 | 28 | 22 | 23 |
| Heat Q transferred through a large surface (kJ) | 396 | 374 | 278 | 203.28 | 183.54 |
| Hₚ (kJ/kg) | 1600 | 1600 | 1600 | 1375 | 600 |
| α | 1.2 | 1.2 | 1.2 | 1.2 | 1.3 |
| Lower limit of a mass of a main heat-absorbing material (g) | 103.08 | 97.45 | 72.28 | 61.60 | 117.65 |
| Upper limit of a mass of a main heat-absorbing material (g) | 309.23 | 292.36 | 216.83 | 184.80 | 352.96 |
| Dimension of a heat-absorbing sheet a×b×c (mm×mm×mm) | 470×80×1.0 | 470×80×7.8 | 470×80×0.9 | 470×80×1.5 | 470×80×2.4 |
| Actual mass m of a heat-absorbing sheet (g) | 38.73 | 302.08 | 34.86 | 58.09 | 92.95 |
| Total thickness ratio of all heat-absorbing sheets (%) | 10 | 54 | 6 | 10 | 17 |
| Nail penetration result | Diffusion | No diffusion | Diffusion | Diffusion | Diffusion |

The present disclosure further provides the following Comparative Example 6.

The only difference between Comparative Example 6 and Comparative Example 5 is that Hₚ of a used heat-absorbing material is 461 kJ/kg.

In Comparative Example 6, the Hₚ value is not within the Hₚ range required by the foregoing relational expression of the present disclosure. α=1.3 is temporarily substituted into the foregoing relational expression of the present disclosure. Through calculation, the lower limit of the mass of the main heat-absorbing material is 152.95 g, and the upper limit of the mass is 458.85 g. However, the actual mass m of the main heat-absorbing material in Comparative Example 6 is 92.95 g, which falls outside a range between the upper limit value and the lower limit value. It is found through a nail penetration test that in the battery assembly of Comparative Example 6, thermal runaway of the battery causes thermal diffusion.

From the above tables, it will be understood that in a battery assembly, when a mass of a heat-absorbing sheet provided between adjacent single-cell batteries satisfies the relational expression required by the present disclosure, the heat-absorbing sheet can effectively suppress thermal diffusion from a single-cell battery in thermal runaway to an adjacent battery, and the total thickness ratio of all heat-absorbing sheets in the battery assembly is relatively low. It will be understood through comparison between Comparative Examples 1 to 2 and Example 1 that the mass of the heat-absorbing sheet in Comparative Example 1 is less than the lower limit value of the foregoing relational expression of the present disclosure, and the heat-absorbing sheet cannot suppress thermal diffusion of the battery during thermal runaway in the battery assembly. In Comparative Example 2, the mass of the heat-absorbing sheet is greater than the upper limit value of the foregoing relational expression of the present disclosure. Although thermal diffusion of the battery during thermal runaway does not occur in the battery assembly, the total thickness ratio of heat-absorbing sheets in the battery assembly is relatively large, which affects assembly efficiency thereof. In addition, comparisons between Comparative Example 3 and Example 4, between Comparative Example 4 and Example 7, and between Comparative Example 5 and Example 8 also show similar phenomena. In Comparative Example 6, the Hₚ value of the heat-absorbing material used is excessively low, leading to weak heat absorption capability, and consequently, the heat-absorbing material cannot effectively suppress thermal diffusion from a battery during thermal runaway.

In addition, the data of Examples 1 to 3 show that for battery assemblies using different types of single-cell batteries, when the mass of the heat-absorbing sheet satisfies the foregoing relational expression defined in the present disclosure, thermal runaway of battery cells can also be suppressed, and the volume ratio thereof is relatively low. The data of Examples 3 to 5 show that, under different arrangement modes of single-cell batteries and heat-absorbing sheets, when the mass of the heat-absorbing sheet is controlled to satisfy the foregoing relational expression defined in the present disclosure, thermal runaway of the battery cells can also be suppressed, and the volume ratio thereof is relatively low. The comparison between Example 3 and Example 6 shows that, for battery assemblies using single-cell batteries of different sizes and capacities, when the mass of the heat-absorbing sheet is controlled to satisfy the foregoing relational expression defined in the present disclosure, thermal runaway of the battery cells can also be effectively suppressed, and the volume ratio of the heat-absorbing sheets is relatively low.

The foregoing embodiments express only several implementations of the present disclosure, and descriptions thereof are relatively specific and detailed, but will not be construed as limiting the scope of the patent of the present disclosure. It will be noted that a person of ordinary skill in the art may also make some modifications and improvements without departing from the conception of the present disclosure, and these modifications and improvements all fall within the protection scope of the present disclosure.

## Claims

1. A battery assembly (300), comprising a plurality of single-cell batteries (100), wherein a heat-absorbing member (20) is provided between first surfaces (10a) of at least some adjacent single-cell batteries (100) that are disposed opposite to each other, the heat-absorbing member (20) comprises a main heat-absorbing material (21), the main heat-absorbing material (21) comprises a heat-absorbing material (212), a latent heat of phase change Hₚ of the heat-absorbing material (212) is greater than or equal to 500 kJ/kg, and a mass m of the main heat-absorbing material (21), which is measured in kg, satisfies the following relational expression: $0.5 Q / \left(α\times {H}_{p}\right) \leq m \leq 1.5 Q / \left(α\times {H}_{p}\right) ,$ wherein Q represents heat transferred outward through the first surface (10a) of one of the single-cell batteries (100) adjacent to the heat-absorbing member (20) during a thermal runaway process, and a unit of the heat is kJ; and α represents a correction factor, wherein when Hₚ is greater than or equal to 500 kJ/kg and less than or equal to 1000 kJ/kg, α is 1.3; when Hₚ is greater than 1000 kJ/kg and less than or equal to 1600 kJ/kg, α is 1.2; when Hₚ is greater than 1600 kJ/kg and less than or equal to 2400 kJ/kg, α is 1.15; and when Hₚ is greater than 2400 kJ/kg, α is 1.1.

2. The battery assembly (300) according to claim 1, wherein a ratio of an area of a surface of the heat-absorbing member (20) in contact with the first surface (10a) to an area of the first surface (10a) is greater than or equal to 0.8 and less than or equal to 1.

3. The battery assembly (300) according to claim 1, wherein a distance between a geometric center of a surface of the heat-absorbing member (20) in contact with the first surface (10a) and a geometric center of the first surface (10a) is less than or equal to 1 mm and greater than or equal to 0.

4. The battery assembly (300) according to any one of claims 1 to 3, wherein the heat-absorbing member (20) further comprises a packaging film (22), an accommodating cavity (221) is formed inside the packaging film (22), and the main heat-absorbing material (21) is provided in the accommodating cavity (221).

5. The battery assembly (300) according to any one of claims 1 to 4, wherein the main heat-absorbing material (21) comprises a skeleton (210) and the heat-absorbing material (212), the skeleton (210) has a plurality of holes (211) extending through the skeleton (210) in a thickness direction of the skeleton (210), and the heat-absorbing material (212) fills the holes (211).

6. The battery assembly (300) according to any one of claims 1 to 4, wherein the main heat-absorbing material (21) is the heat-absorbing material (212).

7. The battery assembly (300) according to any one of claims 1 to 6, wherein the heat-absorbing material (212) is a composite material retaining a liquid phase change medium.

8. The battery assembly (300) according to claim 7, wherein the heat-absorbing material (212) is a hydrogel retaining water, a hydrated salt, or a composite thereof.

9. The battery assembly (300) according to any one of claims 1 to 8, wherein the heat-absorbing member (20) is provided between any two adjacent single-cell batteries (100).

10. The battery assembly (300) according to any one of claims 1 to 9, wherein the heat-absorbing member (20) is sheet-like, a thickness of the heat-absorbing member (20) is less than a length and a width of the heat-absorbing member (20), and a thickness direction of the heat-absorbing member (20) is perpendicular to the first surface (10a) of the single-cell battery (100).

11. The battery assembly (300) according to any one of claims 1 to 10, wherein the single-cell battery (100) has a prismatic housing, and the first surface (10a) is a side surface of the prismatic housing having the largest area.

12. The battery assembly (300) according to any one of claims 1 to 11, wherein a phase change temperature of the heat-absorbing material is in a range of 85°C to 180°C.

13. A device (60), comprising the battery assembly (300) according to any one of claims 1 to 12, wherein the device (60) comprises an electrical equipment or an energy storage system.
